# DEMANDE DE BREVET EUROPEEN

(11) **EP 1 564 400 A1**
(43) Date de publication de la demande: **17.08.2005**
(21) Numéro de dépôt: 05290129.5
(22) Date de dépôt: 20.01.2005
(51) Int. Cl.: F02M 35/104, F16L 11/10, F16L 11/115, B21D 53/18

(54) **Jonc de renfort notamment pour un conduit de système d'alimentation en air d'un moteur de véhicule automobile**

(30) Priorité: 12.02.2004 FR 0401412
(71) Demandeur: Attax, 75116 Paris (FR)
(72) Inventeur: Dubost, Dominique, 78170 La Celle St Cloud (FR); De Azevedo, Helder, 28700 Sainville (FR)
(74) Mandataire: Habasque, Etienne Joel Jean-François

(57) **Abrégé**

Ce jonc de renfort (1) notamment pour un conduit de système d'alimentation en air d'un moteur de véhicule automobile, est caractérisé en ce qu'il est réalisé par découpe et déformation d'un flan de tôle.

## Description

La présente invention concerne un jonc de renfort annulaire, notamment pour un conduit de système d'alimentation en air d'un moteur de véhicule automobile.

On sait, dans l'état de la technique, que de tels joncs sont utilisés pour renforcer de tels conduits en raison des contraintes de températures et de pressions rencontrées notamment dans les systèmes d'alimentation en air des moteurs à turbocompresseurs.

Dans l'état de la technique, ces joncs sont réalisés à partir d'une portion de fil d'acier dont les extrémités sont soudées pour former le jonc.

Cependant, ceci se traduit par un coût relativement élevé de tels joncs.

Le but de l'invention est donc de résoudre ces problèmes.

A cet effet l'invention a pour objet un jonc de renfort notamment pour un conduit de système d'alimentation en air d'un moteur de véhicule automobile, caractérisé en ce qu'il est réalisé par découpe et déformation d'un flan de tôle.

Suivant d'autres caractéristiques conformes à l'invention :
- il présente une section en U couché et ouvert vers l'extérieur,
- les deux branches du U présentent des longueurs différentes, et
- il présente une section tubulaire à contour fermé.

L'invention sera mieux comprise à l'aide de la description qui va suivre donnée uniquement à titre d'exemple et faite en se référant aux dessins annexés sur lesquels :
- la figure 1 représente une vue en perspective d'un jonc selon l'invention ;
- la figure 2 représente une vue en coupe de ce jonc ; et
- la figure 3 représente une vue à échelle agrandie de la coupe de ce jonc.

Le jonc selon l'invention est réalisé par découpe et déformation d'un flan de tôle et plus particulièrement par emboutissage de celui-ci selon un procédé classique en soi comprenant une étape de découpe de ce flan pour obtenir un anneau ou une rondelle de tôle et une phase de déformation progressive de celui-ci sous la forme du jonc.

Ceci permet alors d'obtenir un jonc ne nécessitant aucune opération de soudure et qui peut présenter comme cela est illustré sur les figures, une section en U couché et ouvert vers l'extérieur dont les deux branches du U présentent des longueurs différentes.

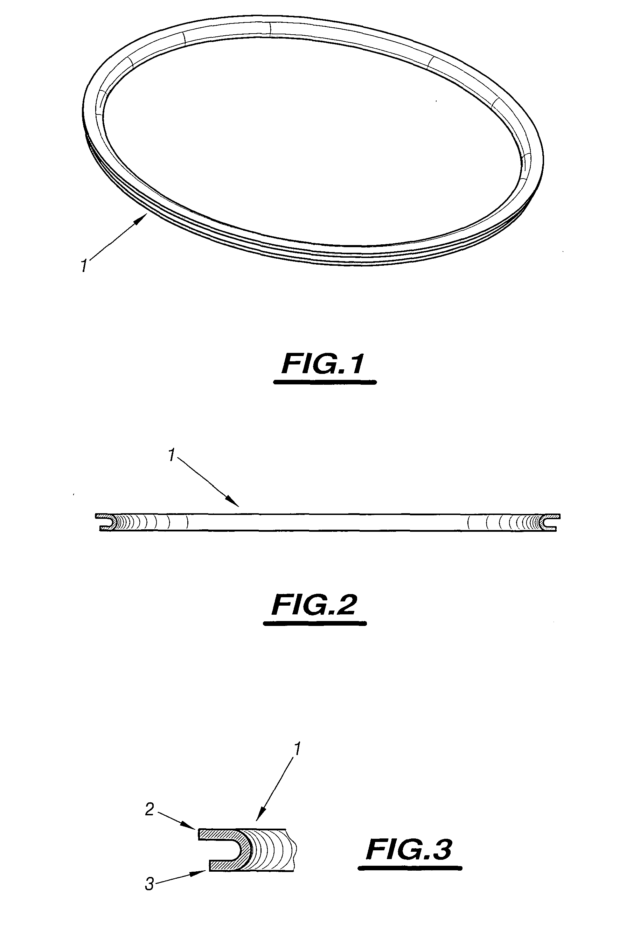

Sur ces figures, le jonc est désigné par la référence générale 1 et les branches de celui-ci sont désignées par les références générales 2 et 3. Comme cela est visible plus clairement sur la figure 3, les branches 2 et 3 de ce jonc présentent des longueurs différentes. La partie arrondie de la section de ce jonc est alors tournée vers l'intérieur de celui-ci c'est-à-dire vers le conduit, tandis que la partie ouverte de celui-ci est tournée vers l'extérieur de celui-ci.

Ceci permet alors d'éviter d'endommager ce conduit.

Bien entendu, d'autres sections peuvent être envisagées.

C'est ainsi par exemple qu'un tel jonc peut présenter une section tubulaire à contour fermé ou autre.

La réalisation d'un tel jonc à partir d'un procédé de découpe et d'emboutissage classique permet de réduire de façon très sensible le prix de ces joncs.

## Revendications

1. Jonc de renfort (1) notamment pour un conduit de système d'alimentation en air d'un moteur de véhicule automobile, **caractérisé en ce qu'**il est réalisé par découpe et déformation d'un flan de tôle.

2. Jonc de renfort selon la revendication 1, **caractérisé en ce qu'**il présente une section en U couché et ouvert vers l'extérieur.

3. Jonc de renfort selon la revendication 2, **caractérisé en ce que** les deux branches du U (2, 3) présentent des longueurs différentes.

4. Jonc de renfort selon la revendication 1, **caractérisé en ce qu'**il présente une section tubulaire à contour fermé.
